# EUROPÄISCHE PATENTSCHRIFT

(11) **EP 2 927 908 B1**
(45) Veröffentlichungstag und Bekanntmachung des Hinweises auf die Patenterteilung: **01.05.2024**
(21) Anmeldenummer: 15000813.4
(22) Anmeldetag: 19.03.2015
(51) Int. Cl.: G21K 1/04

(54) **CHOPPERSCHEIBE SOWIE VORRICHTUNG UND VERFAHREN ZU DEREN HERSTELLUNG**
CHOPPER BLADE AND DEVICE AND METHOD FOR ITS MANUFACTURE
DISQUE INTERRUPTEUR PERFORÉ ET DISPOSITIF ET PROCÉDÉ DESTINÉS À SA FABRICATION

(30) Priorität: 02.04.2014 DE 102014004994
(43) Veröffentlichungstag der Anmeldung: 07.10.2015
(73) Patentinhaber: Airbus Defence and Space GmbH, 82024 Taufkirchen (DE)
(72) Erfinder: Spiegelhalder, Berno, 78467 Konstanz (DE); Keller, Uwe, 88662 Überlingen (DE); Käppeler, Ernst, 88085 Langenargen (DE)
(74) Vertreter: Schicker, Silvia

(56) Entgegenhaltungen:
- DE-A1- 19 906 618
- DE-B1- 2 545 929
- DE-C1- 19 503 939
- JP-A- 2005 300 487
- US-A- 4 629 644

## Beschreibung

Die Erfindung betrifft eine Chopperscheibe für eine Vorrichtung zur Aufbereitung von Neutronenstrahlen, wobei die Chopperscheibe aus Kohlenstofffasern gebildet ist. Eine solche Chopperscheibe weist eine konzentrische, hohlzylindrische Ausnehmung zur Aufnahme einer Nabe für die Verbindung mit einem Drehlager auf. Zum Absorbieren von auf die Chopperscheibe auftretenden Neutronen ist ein konzentrisch ausgebildeter Absorberbereich vorgesehen. In dem Absorberbereich ist zumindest ein Fenster vorgesehen, durch den Neutronen des Neutronenstrahls durchtreten können.

Zur Aufbereitung von Neutronenstrahlen werden sog. Chopper eingesetzt, die - ähnlich wie Röntgenstrahlen - zur Durchleuchtung und Analyse von Materialproben dienen. Rotierende Chopper bzw. Chopperscheiben zerteilen einen kontinuierlichen Neutronenstrahl in zeitlich und räumlich begrenzte Pulse. Die Anzahl der Pulse sowie die Pulsdauer kann durch die Anzahl und Ausgestaltung der in dem Absorberbereich vorgesehenen Fenster festgelegt werden. Durch das Hintereinanderschalten synchron drehender Chopperscheiben lassen sich Neutronenpulse einer definierten Energieform ("Farbe") herausfiltern.

Für den Betrieb der Vorrichtung zur Aufbereitung von Neutronenstrahlen ist es wünschenswert, die Chopperscheibe mit möglichst hohen Drehzahlen betreiben zu können. Als Drehlager werden daher berührungslose Magnetlager eingesetzt, die Drehzahlen von mehr als 20.000 Umdrehungen pro Minute ohne Schmiermittel und wartungsfrei im Strahlenfeld beim Dauerbetrieb ermöglichen.

Ab einer Drehzahl von etwa 15.000 Umdrehungen pro Minute werden aus Gründen der mechanischen Stabilität Chopperscheiben aus Kohlenstofffasern eingesetzt. Mit zunehmender Drehzahl besteht das Erfordernis, die Festigkeit der Chopperscheiben immer weiter zu erhöhen. Die Verarbeitung einer größeren Anzahl an Kohlenstofffasern zur Erhöhung der Festigkeit führt jedoch zu einem höheren Gewicht der Chopperscheibe, das einer höheren Drehzahl entgegensteht.

Chopperscheiben aus Kohlenstofffasern werden aus vorgelegten, zugeschnittenen Fasermatten hergestellt. Bei jeder Fasermatte verlaufen die Kohlenstofffasern parallel zueinander. Die Kohlenstofffasern sind mit einem Kunststoffharz vorgetränkt oder nachträglich imprägniert. Zur Herstellung einer Chopperscheibe werden mehrere der Fasermatten, in der Regel zumindest vier Lagen, übereinander gelegt, wobei die Kohlenstofffasern jeder Lage gegenüber der vorhergehenden Lage um einen vorgegebenen Winkel verdreht sind. In der Regel werden mehrere Pakete zu je vier Lagen verwendet, um die bei den genannten hohen Drehzahlen auftretenden Kräfte aufnehmen zu können.

Ein Nachteil derart hergestellter Chopperscheiben besteht darin, dass diese aufgrund der Vielzahl an Kohlenstofffasern ein verhältnismäßig hohes Gewicht aufweist, wodurch die Maximaldrehzahl nach oben begrenzt ist. Aufgrund der bei der Drehung auftretenden Rotationskräfte (Zentrifugalkraft) trägt zudem immer nur ein Teil der Kohlenstofffasern zur Festigkeit bei.

Die JP 2005-300487 A offenbart eine Chopperscheibe mit einer sich radial nach au-ßen verjüngenden Dicke.

Weiterer Stand der Technik ist aus der DE 25 45 929 B1 bekannt.

Es ist Aufgabe der vorliegenden Erfindung, eine baulich und/oder funktional verbesserte Chopperscheibe anzugeben, welche die Verwendung bei höheren Drehzahlen erlaubt. Eine weitere Aufgabe der Erfindung besteht darin, eine Vorrichtung sowie ein Verfahren zur Herstellung einer solchen Chopperscheibe anzugeben.

Diese Aufgaben werden gelöst durch eine Chopperscheibe gemäß den Merkmalen des Patentanspruchs 1, eine Vorrichtung zum Herstellen einer Chopperscheibe gemäß den Merkmalen des Patentanspruchs 7 und ein Verfahren zum Herstellen einer Chopperscheibe gemäß den Merkmalen des Patentanspruchs 12. Vorteilhafte Ausgestaltungen ergeben sich aus den jeweiligen abhängigen Patentansprüchen.

Gemäß der vorliegenden Erfindung wird eine Chopperscheibe für eine Vorrichtung zur Aufbereitung von Neutronenstrahlen vorgeschlagen, wobei die Chopperscheibe aus Kohlenstofffasern gebildet ist. Die Chopperscheibe weist eine konzentrische, hohlzylindrische Ausnehmung zur Aufnahme einer Nabe für die Verbindung mit einem Drehlager auf. Zum Absorbieren von auf die Chopperscheibe auftreffenden Neutronen ist ein konzentrisch ausgebildeter Absorberbereich vorgesehen. Der Absorberbereich kann beispielsweise ringförmig, in einem radial außen angeordneten Abschnitt der Chopperscheibe vorgesehen sein. In dem Absorberbereich ist zumindest ein Fenster vorgesehen, durch den Neutronen des Neutronenstrahls durchtreten können. Die Anzahl und Ausgestaltung der Fenster wird entsprechend den Notwendigkeiten der Vorrichtung zur Aufbereitung von Neutronenstrahlen gewählt. Erfindungsgemäß erstrecken sich die Kohlenstofffasern vom Außenumfang der Chopperscheibe nahezu radial in Richtung der Ausnehmung und berühren die Ausnehmung tangential.

Die Kohlenstofffasern weisen damit jeweils einen im Wesentlichen radialen Verlauf in Bezug auf eine Rotationsachse der Chopperscheibe auf. Durch diese optimierte Faserlage ergibt sich eine höhere Festigkeit bei gleichzeitig reduziertem Gewicht der Chopperscheibe. Ein weiterer Vorteil besteht darin, dass durch die vorgeschlagene Art der Anordnung der Kohlenstofffasern Chopperscheiben von nahezu gleicher Festigkeit bereitstellbar sind, bei denen das Verhältnis von Scheibendicke zu auftretenden Spannungen optimiert ist. Im Ergebnis kann eine derartige Chopperscheibe mit höheren Rotationsgeschwindigkeiten betrieben werden.

Genauer setzt sich jede der Kohlenstofffasern der Chopperscheibe aus zwei geraden Abschnitten und einem Kreisbogenabschnitt zusammen. Die geraden Abschnitte berühren mit dem Ende, das der Ausnehmung zugewandt ist, die Ausnehmung tangential. Der zwischen den zwei geraden Abschnitten verlaufende Kreisbogenabschnitt entspricht in seinem Verlauf im Wesentlichen dem Rand bzw. dem Umfang der Ausnehmung der Chopperscheibe.

Zweckmäßigerweise erstrecken sich alle Kohlenstofffasern vom Außenumfang der Chopperscheibe nahezu radial in Richtung der Ausnehmung und berühren die Ausnehmung tangential. Hierdurch ergibt sich die erwünschte optimierte Faserlage, welche eine höhere Festigkeit bei reduziertem Gewicht bereitstellt.

In einer Ausgestaltung endet jedes erste und jedes zweite Ende der Kohlenstofffasern am Außenumfang der Chopperscheibe. Ein mittig zwischen dem jeweiligen ersten und zweiten Ende verlaufender Abschnitt beschreibt einen Kreisbogen, dessen Verlauf im Wesentlichen dem Rand bzw. Umfang der Ausnehmung entspricht. Jede der Kohlenstofffasern weist damit drei Abschnitte auf: einen ersten, geraden Abschnitt, einen zweiten, geraden Abschnitt und einen bogenförmigen Abschnitt, der den ersten und den zweiten Abschnitt miteinander verbindet. Der zwischen dem ersten, geraden Abschnitt und dem zweiten, geraden Abschnitt eingenommene (außen) Winkel z. B. beträgt zwischen 180° und 270°. Hierdurch kann eine hohe Stabilität sichergestellt werden. Gleichzeitig wird sichergestellt, dass eine Materialanhäufung im Bereich der Ausnehmung, d.h. der später dort angeordneten Nabe und der sich überkreuzenden Kohlenstofffasern im inneren Bereich bleibt. Dadurch können die radial außen gelegenen Bereiche bei den erwünschten hohen Drehzahlen von übermäßigen Kräften verschont bleiben. Der ideale Winkel zwischen den geraden Abschnitten und damit der Verlauf (bzw. umlaufende Winkel) des bogenförmigen Abschnitts hängt von der Anzahl der in einer erfindungsgemäßen Chopperscheibe verarbeiteten Kohlenstofffasern und insbesondere der übereinander angeordneten Kohlenstofffaserlagen ab. Der ideale Winkel kann im Rahmen eines Optimierungsprozesses oder durch Versuche ermittelt werden.

Bezogen auf eine den Umfang der Chopperscheibe berührende Tangente schneidet jedes erste und zweite Ende (bzw. der erste und zweite gerade Abschnitt) die ihm zugeordnete Tangente annähend orthogonal. Die Kreuzung vom ersten und zweitem Ende (bzw. der erste und zweite gerade Abschnitt) und der zugeordneten Tangente ist lediglich annähernd orthogonal, da die Kohlenstofffasern aufgrund des Vorhandenseins der Ausnehmung zur Aufnahme der Nabe nicht durch das Zentrum, d.h. die Rotationsachse, der Chopperscheibe verlaufen können. Um dem idealen radialen Verlauf möglichst nahe zu kommen, berühren die geraden Abschnitte der Kohlenstofffasern den Umfang der Ausnehmung tangential.

Jede der Kohlenstofffasern kann keinen, einen, zwei oder mehrere Kreuzungspunkte zu anderen Kohlenstofffasern aufweisen. Dies ist abhängig davon, ob die geraden Abschnitte einer zugeordneten Kohlenstofffaser in Bezug auf eine andere Kohlenstofffaser jeweils einen gleichen oder einen unterschiedlichen (außen) Winkel aufweisen.

In einem Querschnitt in einer Ebene, in der eine Rotationsachse der Chopperscheibe liegt, nimmt die Dicke der Chopperscheibe, ausgehend von der Rotationsachse in Richtung des Außenumfangs, stetig ab. Dadurch, dass die Chopperscheibe keine Sprünge aufweist, ist gegenüber aus Fasermatten hergestellten Chopperscheiben bei reduziertem Gewicht eine höhere Festigkeit erzielbar. Es ist in diesem Zusammenhang insbesondere zweckmäßig, wenn die Chopperscheibe in dem Querschnitt zumindest abschnittsweise auf jeder Seite eine konvexe Wölbung aufweist. Die Querschnittsform bzw. der Verlauf des Querschnitts der Chopperscheibe ist nicht nur durch den Legevorgang der einzelnen Kohlenstofffasern, sondern insbesondere auch durch ein Verpressen mit einem Presswerkzeug erzeugt. Die Form der Chopperscheibe bzw. der Verlauf der äußeren Flächen folgen den Formen des Presswerkzeugs. Hieraus ergibt sich, dass das Presswerkzeug konkave Einbuchtungen ausweist, um die konvexe Wölbung realisieren zu können.

Die Kohlenstofffasern sind zweckmäßigerweise in ein Harzsystem eingebettet oder von dem Harzsystem umgeben. Als Harzsystem kann beispielsweise HEXION L20 mit einem Härter, z.B. EPH 960, verwendet werden. Wie aus dem weiter unten beschriebenen Verfahren zum Herstellen der Chopperscheibe ersichtlich werden wird, können die Kohlenstofffasern vor dem "Legen" bereits mit Harz getränkt sein oder nach dem Legen mit dem Harz infiltriert werden.

Der Durchmesser der Chopperscheibe beträgt in einer konkreten Ausgestaltung zwischen 50 cm und 80 cm. Der Durchmesser der Nabe kann 50 mm bis 100 mm betragen. Der Faservolumengehalt kann zwischen 50 % und 70 % betragen.

Das zumindest eine Fenster kann in einem an den Außenumfang der Chopperscheibe grenzenden Abschnitt vorgesehen sein. Das oder die Fenster können durch einen Fräs- oder Schneideprozess nach der Herstellung der Chopperscheibe in diesen eingebracht werden.

Ein Aspekt der vorliegenden Erfindung betrifft einen Wickeldorn. Der Wickeldorn umfasst einen Zylinder, dessen axiale Länge sehr viel kleiner als der Radius ist. Der Radius des Zylinders ist etwas größer als der für die herzustellende Chopperscheibe benötigte Durchmesser. Die axiale Länge kann beispielsweise um den Faktor 10 kleiner sein. Der Wickeldorn umfasst weiter zwei Domkappen, wie auf dem gegenüberliegenden Endes des Zylinders angeordnet sind und jeweils eine nach innen gerichtete konkave Einbuchtung aufweisen. Der Zylinder und die zwei Domkappen können einstückig ausgebildet sein. Durch die jeweils nach innen gerichtete konkave Einbuchtung der zwei Domkappen ist die axiale Länge des zylindrischen Wickeldorns im Bereich einer Rotationsachse kleiner als im Bereich des Außenumfangs. Schließlich umfasst der Wickeldorn eine durch den Zylinder und die Domkappen in axialer Richtung des Wickeldorns hindurchgehende, konzentrische Ausnehmung, durch die eine Welle zur Aufnahme einer, insbesondere zweigeteilten, Welle für die Verbindung mit einem Antrieb.

Der Wickeldorn ist Bestandteil einer Vorrichtung zum Herstellen der Chopperscheibe und ermöglicht es, im Gegensatz zur Verwendung von vorgelegten, zugeschnittenen Fasermatten, eine endlose Kohlenstofffaser auf den Wickeldorn zu wickeln, um gleichzeitig zwei der wie oben beschriebenen Chopperscheiben zu erhalten. Insbesondere ermöglichen es die Verwendung eines Wickeldorns und das damit einhergehende Wickelverfahren, Chopperscheiben zu fertigen, deren Dicke, ausgehend von der Rotationsachse in Richtung des Außenumfangs stetig und damit ohne Sprünge abnimmt. Dadurch können Chopperscheiben von nahezu gleicher Festigkeit mit optimiertem Verhältnis von Scheibendicke zur Spannung gewickelt werden.

In einer Ausgestaltung des Wickeldorns ist auf dem Außenumfang des Zylinders ein Nadelkranz oder eine rutschhemmende Oberfläche vorgesehen. Dies ermöglicht es, eine auf einer ersten der Domkappen gelegte Kohlenstofffaser über den zylindrischen Wickeldorn auf der anderen der beiden Domkappen abzulegen. Dabei ist sichergestellt, dass die Kohlenstofffaser nicht in radialer Richtung verrutschen kann. Die rutschhemmende Oberfläche kann beispielsweise auch durch ein entsprechendes Material, wie z.B. einen Gummi oder eine poröse Oberfläche, bereitgestellt werden. Wie erwähnt, weist der Wickeldorn einen Durchmesser auf, der etwas größer als der zu erzielende Durchmesser der Chopperscheibe ist. Gemäß einer konkreten Ausgestaltung des Wickeldorns beträgt der Durchmesser zwischen 55 cm und 90 cm. Die axiale Länge beträgt beispielsweise zwischen 5 cm und 20 cm.

Gemäß der Erfindung wird eine Vorrichtung zum Herstellen einer Chopperscheibe der oben beschriebenen Art vorgeschlagen. Die Vorrichtung umfasst einen wie oben beschrieben Wickeldorn. Ferner umfasst die Vorrichtung eine Welle, welche durch die Ausnehmung des Wickeldorns geführt und mit dem Wickeldorn form- und/oder kraftschlüssig verbunden ist. Es ist ein Antrieb vorgesehen, um die Welle in eine Drehung versetzen zu können. Ferner umfasst die Vorrichtung eine relativ zu dem Wickeldorn verfahrbare Kohlenfaserzuführvorrichtung, die dazu ausgebildet ist, eine endlose Kohlenstofffaser auszugeben. Schließlich umfasst die Vorrichtung eine Steuervorrichtung, welche die Drehgeschwindigkeit und den Drehwinkel des Wickeldorns relativ zu der Bewegung der Kohlenstofffaserzuführvorrichtung in vorgegebener Weise steuert, um die endlose Kohlenstofffaser um den Wickeldorn zu wickeln.

Durch das Zusammenspiel der genannten Komponenten ist es möglich, eine endlose Kohlenstofffaser um den Wickeldorn zu wickeln. Dadurch entstehen in einer ersten Vorstufe zwei der oben beschriebenen Chopperscheiben mit deren vorteilhaften Eigenschaften.

Um das Wickeln in der oben beschriebenen Weise zuverlässig durchführen zu können, ist es zweckmäßig, wenn die Welle beidseitig des Wickeldorns eine sich von der Welle weg erweiternde Kegelform aufweist. Hierdurch ist sichergestellt, dass die große Anzahl an um die Ausnehmung des Wickeldorns bzw. um die Welle geführten Kohlenstofffasern in Richtung des Wickeldorns gepresst werden und nicht lose in eine undefinierte Position rutschen können.

Gemäß einer weiteren Ausgestaltung ist eine Einheit zum Tränken der endlosen Kohlenstofffaser mit einem Harzsystem vorgesehen, welche die Kohlenstofffaser vor dem Wickelvorgang mit dem Harzsystem benetzt oder tränkt. Alternativ kann das Benetzen oder Tränken der Kohlenstofffasern auch nach dem Umwickeln des Wickeldorns erfolgen.

Die Vorrichtung umfasst gemäß einer weiteren Ausgestaltung zwei Pressscheiben, welche jeweils eine der konkaven Wölbung des Wickeldorns entsprechende konkave Wölbung sowie einen dem Wickeldorn entsprechenden Durchmesser aufweisen, um nach dem Wickelvorgang von den gegenüberliegenden Seiten des Wickeldorns auf die Welle geschoben und miteinander verspannt zu werden.

Durch die Pressscheiben erfolgt eine Verpressung der um den Wickeldorn gewickelten endlosen Kohlenstofffaser, um eventuell beim Wickeln auftretende Zwischenräume zu eliminieren und eine symmetrische Formgebung der Chopperscheibe sicherzustellen. Dies wird durch die korrespondierenden Hüllformen der Domkappen des Wickeldorns und der zwei Pressscheiben sichergestellt.

Das Verpressen erfolgt in einem Autoklaven, in dem auch eine Aushärtung der mit den Pressscheiben verspannten Anordnung unter Vakuumatmosphäre erfolgt.

Gemäß der vorliegenden Erfindung wird ein Verfahren zum Herstellen einer wie oben beschriebenen Chopperscheibe unter Verwendung der oben beschriebenen Vorrichtung vorgeschlagen. Das Verfahren umfasst die folgenden Schritte:
a) Wickeln der von der Kohlenfaserzuführvorrichtung endlos ausgegebenen Kohlenstofffaser entsprechend eines vorgegebenen Ablageplans um den Wickeldorn, wobei die Kohlenstofffaser bei jedem Wickelschritt tangential an der Welle und über den Nadelkranz oder die rutschhemmende Oberfläche geführt wird, um auf beiden Seiten des Wickeldorns eine Chopperscheibe zu erstellen;
b) Verpressen der Kohlenstofffaser, indem auf dem gegenüberliegenden Seiten des Wickeldorns jeweils eine Pressscheibe auf die Welle geschoben wird;
c) Durchtrennen der Kohlenstofffaser im Bereich des Umfangs des Wickeldorns, um zwei Chopperscheiben zu erhalten, welche jeweils zwischen dem Wickeldorn und der zugeordneten Pressscheibe erzeugt wurden, wobei das Durchtrennen während des Verpressens erfolgt;
d) Aushärten der noch verpressten Kohlenstofffaser in einem Autoklaven unter Vakuum gemäß einem vorgegebenen Zeit-, Druck- und Temperaturprofil;
e) Entfernen der Pressscheiben;
f) Erzeugen der Außenkontur und des zumindest eines Fensters bei jeder der Chopperscheiben.

Gemäß einer weiteren Ausgestaltung des Verfahrens erfolgt die Herstellung des Rands und des zumindest einen Fensters durch abrasives Wasserstrahl schneiden oder fräsen.

Die Kohlenstofffasern können durch die oder in der Kohlenstofffaserzuführvorrichtung mit dem Harzsystem getränkt werden. Alternativ oder zusätzlich kann das Harzsystem nach dem Wickelvorgang in das Kohlenstofffasergelege eingebracht werden. Das Einbringen erfolgt bevorzugt vor dem Pressvorgang.

Die Erfindung wird nachfolgend näher anhand eines Ausführungsbeispiels in der Zeichnung erläutert. Es zeigen:
- Fig. 1: eine Draufsicht auf eine herkömmliche Chopperscheibe mit einer Anzahl an Fenstern,
- Fig. 2: eine Querschnittsdarstellung der in Fig. 1 gezeigten Chopperscheibe,
- Fig. 3: einen zur Herstellung eine erfindungsgemäßen Chopperscheibe verwendeten Wickeldorn in einer Querschnittsdarstellung,
- Fig. 4: eine Draufsicht auf den in Fig. 2 gezeigten Wickeldorn und beispielhaft zwei über den Wickeldorn geführte Kohlenstofffaserabschnitte,
- Fig. 5: einen Schnitt durch eine erfindungsgemäße Pressvorrichtung, in die der mit einer endlosen Kohlenstofffaser bewickelte Wickeldorn eingebracht ist,
- Fig. 6: eine perspektivische Darstellung eines erfindungsgemäßen Wickeldorns mit einem an seinen Außenumfang angeordneten Nadelkranz,
- Fig. 7: eine andere Darstellung der in Fig. 5 gezeigten Pressvorrichtung, aus der die erzeugte Gestalt zweier erfindungsgemäßer Chopperscheiben hervorgeht, und
- Fig. 8: die in einen Autoklaven eingebrachte Pressvorrichtung zum Aushärten des Kohlenstofffasergeleges.

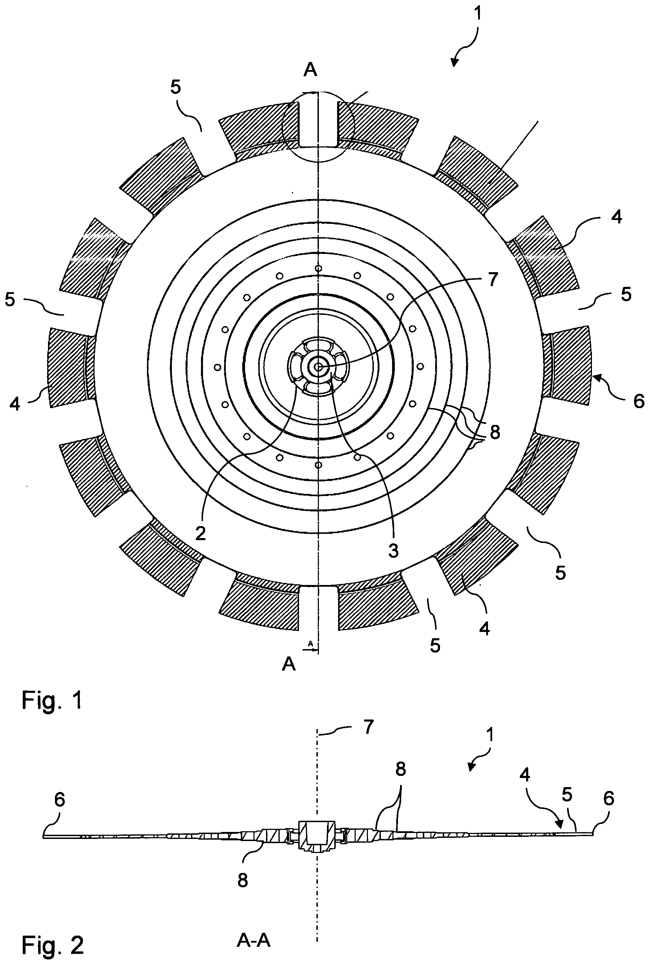

Die Figuren 1 und 2 zeigen eine Draufsicht sowie einen Schnitt längs der Linie A-A durch eine herkömmliche Chopperscheibe 1. Die Chopperscheibe 1 weist eine konzentrische, hohlzylindrische Ausnehmung 2 zur Aufnahme einer Nabe 3 für die Verbindung mit einem Drehlager auf. Das Drehlager kann als Magnetlager ausgebildet sein. Die Chopperscheibe 1 ist aus einer Vielzahl an vorgelegten, zugeschnittenen Fasermatten hergestellt.

Typischerweise setzt sich die Chopperscheibe aus mehreren Paketen zu jeweils vier Fasermattenlagen zusammen. Die Kohlenfasern einer jeweiligen Fasermatte sind dabei parallel zueinander ausgerichtet. Die Fasermatten eines Pakets sind zueinander verdreht, so dass die Kohlenfasern einer jeweiligen Lage gegenüber der benachbarten Lage in einem vorgegebenen Winkel verdreht angeordnet sind. Nachdem die Vielzahl an Fasermatten miteinander laminiert wurden, erfolgt ein Zuschnitt, so dass der kreisrunde Außenumfang 6 (Umfang) der Chopperscheibe 1 erzielt ist.

In einem radial außen angeordneten Abschnitt ist ein Absorberbereich 4 vorgesehen. Der Absorberbereich 4 ist mit einer Vielzahl an Fenstern 5 versehen. Die Fenster 5 sind in der Gestalt von Nuten, beispielsweise durch Fräsen oder Wasserstrahlschneiden in den Absorberbereich 4 eingebracht. Der Absorberbereich 4 ist mit einem Absorbermaterial, z.B. Bor, versehen und undurchlässig für Neutronen.

Um bei einer Drehung mit einer vorgegebenen Drehzahl, in der Regel mehr als 20.000 Umdrehungen pro Minute, die mit zunehmenden Abstand von der Rotationsachse 7 größer werdenden Kräfte gering zu halten, nimmt die Dicke der Chopperscheibe 1 mit zunehmendem Abstand von der Rotationsachse 7 ab. Die Reduktion der Dicke wird durch ein Material abtragendes Verfahren, z.B. Fräsen oder Reduzierung der Anzahl der Faserlagen, erzielt, wodurch sich die mit dem Bezugszeichen 8 gekennzeichneten konzentrischen, unstetigen Übergänge (Kanten) ergeben (Fig. 2). In diesem Bereich findet somit eine Materialschwächung statt, so dass die Maximaldrehzahl der Chopperscheibe 1 aus diesem Grund, aber auch aufgrund der Vielzahl von Fasern, die entsprechend ihrem Winkel zur Zentrifugalkraft wenig oder nichts zur Festigkeit beitragen, begrenzt ist. Durch ihr Gewicht erzeugen diese Fasern dennoch eine Last, so dass die Festigkeit der Chopperscheibe 1 insgesamt begrenzt ist.

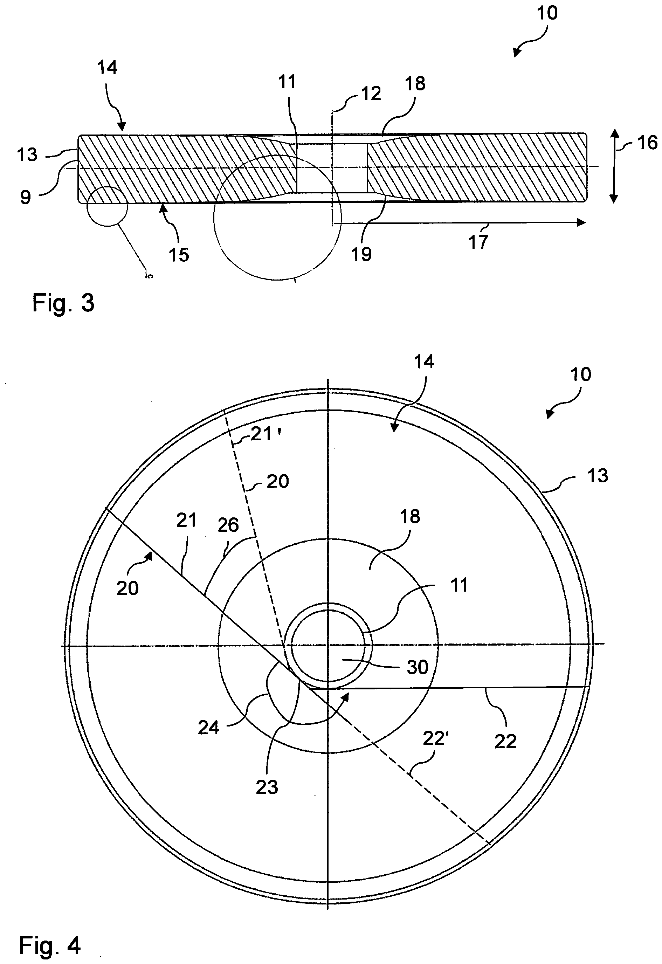

Demgegenüber erfolgt die Herstellung einer erfindungsgemäßen Chopperscheibe 1 nicht mit Hilfe von vorgelegten, zugeschnittenen Fasermatten, sondern durch einen Wickelprozess mit Hilfe eines in den Fig. 3 und 4 dargestellten Wickeldorns 10. Der Wickeldorn 10 weist die Gestalt einer Scheibe oder eines Zylinders 9 auf, d.h. dessen axiale Länge 16 ist wesentlich kürzer als der Radius 17 des Wickeldorns bzw. Zylinders 9. Dies kann der Fig. 3 entnommen werden. Der Radius 17 des Wickeldorns 10 ist geringfügig größer als der zu erzielende Radius der herzustellenden Chopperscheibe. Soll der Radius der Chopperscheibe zwischen 25 cm und 40 cm betragen, so ist der Radius des Wickeldorns 10 beispielsweise 2,5 cm bis 5 cm größer.

Der Wickeldorn 10 besteht aus dem Zylinder 9 und aus einer ersten und zweiten Domkappe 14, 15, welche eine erste und zweite Seitenfläche des Wickeldorns 10 darstellen. Die Domkappen 14, 15 sind über eine axial verlaufende Umfangsfläche 13 des Zylinders 9 miteinander verbunden. Umfangsfläche 13 und Domkappen 14, 15 können einstückig ausgebildet sein. Diese können alternativ auch form- und/oder kraftschlüssig miteinander verbunden sein.

Wie aus der Querschnittsdarstellung der Fig. 3 gut hervorgeht, weisen die Domkappen 14, 15 konkave Einbuchtungen 18, 19 auf, so dass der Wickeldorn 10 im Bereich der Rotationsachse 12 eine geringere axiale Länge aufweist als im Bereich des Umfangs. Wie aus der nachfolgenden Beschreibung deutlich werden wird, dienen die konkaven Einbuchtungen 18, 19 dazu, das Volumen der zu wickelnden Kohlenstofffaser aufzunehmen und die mit zunehmendem Abstand von der Rotationsachse 12 geringere Dicke der Chopperscheibe 1 zu ermöglichen.

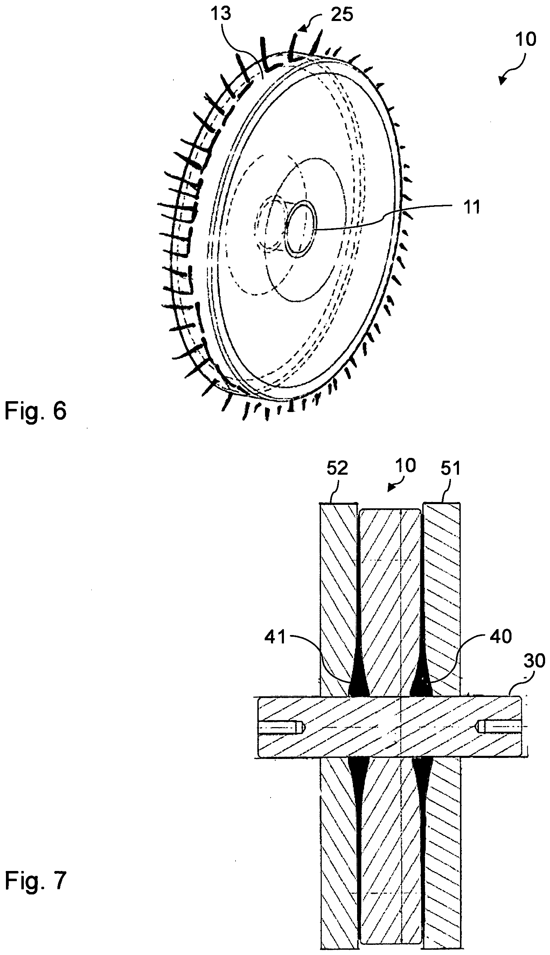

Für den Wickelvorgang ist der Wickeldorn 10 auf seiner Umfangsfläche 13 zusätzlich mit einem Nadelkranz 25 (vergl. Fig. 6) oder einer anderen rutschhemmenden Oberfläche versehen. Der Nadelkranz 25 oder die rutschhemmende Oberfläche dienen dazu, das Umwickeln des Wickeldorns 10 auf beiden Seiten der Domkappen 14, 15 über die Umfangsfläche 13 hinweg zu ermöglichen und dabei sicher zu stellen, dass die die Umfangsfläche 13 überquerende Kohlenstofffaser 20 seitlich nicht verrutscht. Der Nadelkranz 25 oder die rutschhemmende Oberfläche der Umfangsfläche 13 ermöglichen die Verwendung einer endlosen Kohlenstofffaser.

Lediglich beispielshaft ist in der Draufsicht auf dem Wickeldorn 10 in Fig. 4 der Verlauf zweier Kohlenstofffaserabschnitte dargestellt. Mit dem Bezugszeichen 20 ist die endlose Kohlenstofffaser gekennzeichnet. In einem ersten Wickeldurchgang wird dabei der mit der durchgezogenen Linie gekennzeichnete Verlauf der Kohlenstofffaser 20 mit den Abschnitten 21, 22, 23 erzielt. In einem weiteren Wickeldurchgang (dies muss nicht der darauffolgende, sondern kann beispielsweise der hundertste oder fünfhundertste folgende Wickeldurchgang sein) wird der mit der durchbrochenen Linie gekennzeichnete Verlauf der Kohlenstofffaser 20 mit den Abschnitten 21', 22', 23' erzielt.

Der im ersten Wickeldurchgang gelegte Kohlenstofffaserabschnitt besteht aus einem ersten, geraden Abschnitt 21 und einem zweiten, geraden Abschnitt 22 sowie einem dazwischen liegenden, gebogenen Mittenabschnitt 23. Die geraden Abschnitte 21, 22 erstrecken sich dabei von Außenumfang, d.h. der Umfangsfläche 13 des Wickeldorns 10 radial in Richtung der Ausnehmung 11, in welcher eine Welle 30 angeordnet ist. Dabei berühren die geraden Abschnitte die Ausnehmung 11 bzw. die Welle 30 zunächst tangential. An diesem Punkt gehen die geraden Abschnitte 21, 22 in den Mittenabschnitt 23 über, dessen Verlauf im Wesentlichen dem Rand bzw. dem Umfang der Ausnehmung bzw. der Welle entspricht. Der zwischen dem ersten und dem zweiten, geraden Abschnitt 21, 22 eingenommene (außen) Winkel 24 beträgt vorzugsweise zwischen 180° und 225°.

Nachdem der gerade Abschnitt 22 den Außenumfang bzw. die Umfangsfläche 13 erreicht hat, erstreckt sich dieser in axialer Richtung der Rotationsachse 12 über die Umfangsfläche 13 hinweg und wird in einer wie soeben beschriebenen Weise auf der nicht sichtbaren Seite des Wickeldorns 10 entsprechend gewickelt. Nachdem ein entsprechender Wickelvorgang auch auf der nicht sichtbaren Rückseite der Wickeldorns 10 erfolgt ist, wird die Kohlenstofffaser wieder in axialer Richtung über die Umfangsfläche 13 geführt und der Wickelvorgang auf der dargestellten Domkappe 14 wiederholt, was z.B. in dem gestrichelten Verlauf der Kohlenstofffaser resultiert. Dabei ist der Anfang des ersten, geraden Abschnitts 21' in einem vorgegebenen Winkel 26 zu dem mit der durchgezogenen Linie 21 gekennzeichneten Abschnitt versetzt. Wie groß der Winkelversatz zwischen den auf einer Domkappe aufeinanderfolgenden Kohlenstofffaserabschnitten ist, kann anhand von Optimierungsrechnungen oder Versuchen bestimmt werden.

Aus der beschriebenen Vorgehensweise ist ersichtlich, dass der Nadelkranz 25 oder die rutschhemmende Oberfläche auf der Umfangsfläche 13 dazu dient, den über die Umfangsfläche in axialer Richtung verlaufenden Abschnitt der endlosen Kohlenstofffaser zu fixieren.

Der Wickelvorgang wird so häufig ausgeführt, bis eine vorgegebene Anzahl an übereinanderliegenden Lagen von Kohlenstofffasern erzielt ist. Eine Anzahl von 4 bis 8 Lagen (in axialer Richtung übereinander) ist dabei ausreichend.

Um sicherzustellen, dass der um die Welle geführte Mittenabschnitt der Kohlenstofffaser 20 in Richtung des Wickeldorns 10 geführt wird, ist die in Fig. 3 und 4 nicht dargestellte Welle 30 vorzugsweise kegelförmig ausgebildet, so dass der Durchmesser der Welle 30 sich von der Ausnehmung 11 weg erweitert. Dies ist aus den Figuren nicht ersichtlich.

Das Zuführen der endlosen Kohlenstofffaser kann über eine Kohlenstofffaserzuführvorrichtung realisiert werden, welche dem Wickeldorn eine im Harzbaddurchlauf getränkte Kohlenstofffaser (C-Faser-Roving) zuführt. Das Ablegen der Kohlenstofffaser auf dem Wickeldorn erfolgt maschinell entsprechend eines vorgegebenen Ablageplans.

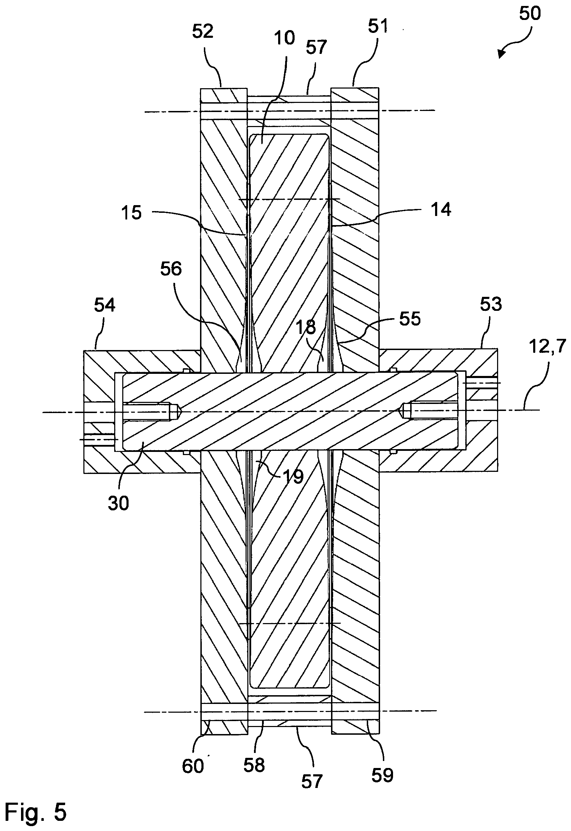

Wie ohne weiteres ersichtlich ist, entstehen Laminate für zwei Chopperscheiben, d.h. auf jeder Seite der Domkappe 14, 15 entsteht eine Chopperscheibe. Der Faservolumengehalt wird beim Ablegen über ein Stranggewicht eingestellt und kontrolliert. Beim Ablegen der Kohlenstofffaser soll diese radial von innen nach außen gespreizt werden. Die Kohlenstofffaser wird spaltfrei und gleichmäßig überdeckend abgelegt. Wenn alle Faserlagen abgelegt sind, erfolgt ein Verpressen mittels der in Fig. 5 schematisch dargestellten Pressvorrichtung 50. Dabei werden auf die Welle 30 von beiden Seiten des Wickeldorns 10 her Pressscheiben 51, 52 aufgebracht und über Distanzhülsen 57 in einem definierten Abstand zueinander gehalten. Über Bohrungen 58, 59, 60 können die Pressscheiben 51, 52 am Außenumfang durch die Distanzhülsen 57 hindurch miteinander verbunden werden. Ein Verspannen der Pressscheiben 51, 52 erfolgt mittels Spannhülsen 53, 54. Diese werden über die Welle 30 geführt und derart mit dieser verbunden, dass eine Kraftbeaufschlagung der Pressscheiben 51, 52 erfolgt.

Wie ohne weiteres der Querschnittsdarstellung der Fig. 5 entnehmbar ist, weisen sowohl die erste als auch die zweite Pressscheibe 51, 52 eine konkave Einbuchtung 55, 56 auf, die den konkaven Einbuchtungen 18, 19 des Wickeldorns entsprechen. Hierdurch die symmetrische Gestalt der entsprechenden Chopperscheiben 40, 41 (vergl. Fig. 7) sichergestellt.

Wurden die Kohlenstofffasern nicht bereits während des Wickelvorgangs mit einem Harzsystem getränkt, so kann dies auch vor dem Schritt des Verpressens oder gleichzeitig mit dem Verpressen erfolgen.

Während des Verpressens erfolgt das Durchtrennen des laminierten Kohlenstofffaserverbunds entlang des Umfangs des Wickeldorns 10. Das Durchtrennen kann beispielsweise durch Fräsen, Schneiden oder durch Wasserstrahlschneiden erfolgen. Während des Durchtrennens sind die in ihrer Form bereits festgelegten Chopperscheiben 40, 41 schon in der Laminiervorrichtung 50 leicht eingespannt.

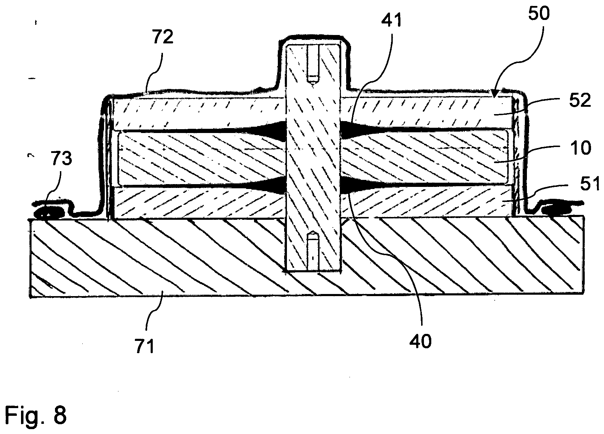

Anschließend erfolgt eine Aushärtung in Autoklaven, welche exemplarisch in Fig. 8 dargestellt ist. Der Autoklav 70 umfasst eine Bodenplatte 71 sowie einen Deckel 72. Zwischen diesen ist eine umlaufende Dichtung 73 angeordnet. In dem Autoklaven 70 erfolgt eine Aushärtung gemäß einem vorgegebenen Druck-, Temperatur- und Zeitverlauf. Nach Beendigung der Aushärtung erfolgt eine Entformung, wobei die beiden Chopperscheiben 40, 41 danach freiliegend getempert werden. Das Tempern erfolgt in vorgegebener Weise gemäß einem zeitlich vorgegebenen Temperaturprofil.

Anschließend werden der Rand und die Randausschnitte (Fenster) durch ein materialabtragendes Verfahren bearbeitet. Hierzu kann beispielsweise das Wasserstrahlschneiden eingesetzt werden, wodurch die Außenkontur der Chopperscheibe festgelegt wird, d.h. der Radius der Chopperscheibe wird festgelegt und die Anzahl und Form der benötigten Fenster werden in den Absorberbereich eingebracht. Der Absorberbereich wird zudem mit einem Absorbermaterial, z.B. Bor in bekannter Weise beschichtet.

Im Ergebnis sind zwei Chopperscheiben bereitgestellt, bei denen sämtliche nun einzeln vorliegende Kohlenstofffasern einen nahezu radialen Verlauf aufweisen. Bedingt durch das Fertigungsverfahren ergibt sich, dass die Dicke der Chopperscheibe, ausgehend von der Rotationsachse in Richtung des Außenumfangs, stetig abnimmt. Auf jeder Seite weisen die Chopperscheiben eine konvexe Wölbung auf. Dadurch sind Chopperscheiben von nahezu gleicher Festigkeit bereitgestellt, welche ein optimiertes Verhältnis von Scheibendicke zu Spannung aufweisen. Dadurch ist es möglich, die Chopperscheiben mit höheren Rotationsgeschwindigkeiten einzusetzen.

Obwohl die Herstellung der Chopperscheiben aus einer einzelnen, endlosen Kunststofffaser erfolgt, besteht jede der Chopperscheiben nach Beendigung des Herstellungsverfahren aus vielen einzelnen Kohlenstofffäden, welche sich vom Außenumfang der Chopperscheibe radial in Richtung der Ausnehmung zur Aufnahme der Nabe erstrecken und die Ausnehmung tangential berühren.

### BEZUGSZEICHENLISTE

- 1: Chopperscheibe
- 2: Ausnehmung
- 3: Nabe
- 4: Absorberbereich
- 5: Fenster
- 6: Außenumfang
- 7: Rotationsachse
- 8: unstetiger Übergang (Kante)
- 9: Zylinder
- 10: Wickeldorn
- 11: Ausnehmung zur Aufnahme einer Welle
- 12: Rotationsachse
- 13: Umfangsfläche des Zylinders
- 14: Domkappe bzw. erste Seitenfläche des Wickeldorns
- 15: Domkappe bzw. zweite Seitenfläche des Wickeldorns
- 16: axiale Länge des Wickeldorns bzw. Zylinders
- 17: Radius des Wickeldorns bzw. Zylinders
- 18: konkave Einbuchtung
- 19: konkave Einbuchtung
- 20: Kohlenstofffaser
- 21: erster, gerader Abschnitt der Kohlenstofffaser 20
- 22: zweiter, gerader Abschnitt der Kohlenstofffaser 20
- 23: gebogener Mittenabschnitt der Kohlenstofffaser 20
- 21': erster, gerader Abschnitt der Kohlenstofffaser 20
- 22': zweiter, gerader Abschnitt der Kohlenstofffaser 20
- 23': gebogener Mittenabschnitt der Kohlenstofffaser 20
- 24: (Außen)Winkel zwischen dem ersten und dem zweiten Abschnitt 21, 22
- 25: Nadelkranz
- 26: Winkel
- 30: Welle

- 40: erste Chopperscheibe
- 41: zweite Chopperscheibe

- 50: Pressvorrichtung
- 51: erste Pressscheibe
- 52: zweite Pressscheibe
- 53: erste Spannhülse
- 54: zweite Spannhülse
- 55: konkave Einbuchtung der ersten Pressscheibe 51
- 56: konkave Einbuchtung der zweiten Pressscheibe 52
- 57: Distanzhülse
- 58: Bohrung
- 59: Bohrung
- 60: Bohrung

- 70: Autoklav
- 71: Bodenplatte
- 72: Deckel
- 73: Dichtung

## Patentansprüche

1. Chopperscheibe (1) für eine Vorrichtung zur Aufbereitung von Neutronenstrahlen, wobei die Chopperscheibe (1) aus Kohlenstofffasern (20) gebildet ist und folgendes aufweist:
- eine konzentrische, hohlzylindrische Ausnehmung (2) zur Aufnahme einer Nabe für die Verbindung mit einem Drehlager,
- einen konzentrisch ausgebildeten Absorberbereich (4) zum Absorbieren von auf die Chopperscheibe (1) auftreffenden Neutronen, und
- zumindest ein Fenster (5) in dem Absorberbereich (4) umfasst, durch den Neutronen des Neutronenstrahls durchtreten können,
**dadurch gekennzeichnet, dass**
- die Kohlenstofffasern (20) sich vom Außenumfang (6) der Chopperscheibe (1) nahezu radial in Richtung der Ausnehmung (2) erstrecken und die Ausnehmung (2) tangential berühren.

2. Chopperscheibe (1) nach Anspruch 1, bei der jedes erste und zweite Ende der Kohlenstofffasern (20) am Außenumfang (6) endet und ein mittig zwischen dem jeweiligen ersten und zweiten Ende verlaufender Abschnitt (23) einen Kreisbogen beschreibt, dessen Verlauf im Wesentlichen dem Rand der Ausnehmung (2) entspricht.

3. Chopperscheibe (1) nach einem der vorhergehenden Ansprüche, bei der in einem Querschnitt in einer Ebene, in der eine Rotationsachse (7) der Chopperscheibe (1) liegt, die Dicke der Chopperscheibe (1), ausgehend von der Rotationsachse (7) in Richtung des Außenumfangs (6) stetig abnimmt.

4. Chopperscheibe (1) nach Anspruch 3, bei der diese in dem Querschnitt zumindest abschnittsweise auf jeder Seite eine konvexe Wölbung aufweist.

5. Chopperscheibe (1) nach einem der vorhergehenden Ansprüche, bei der der Faservolumengehalt zwischen 50% und 70% beträgt.

6. Chopperscheibe (1) nach einem der vorhergehenden Ansprüche, bei der das zumindest eine Fenster (5) in einem an den Außenumfang (6) der Chopperscheibe (1) grenzenden Abschnitt vorgesehen ist.

7. Vorrichtung zum Herstellen einer Chopperscheibe (1) nach einem der Ansprüche 1 bis 6, umfassend:
- einen Wickeldorn (10) mit
-- einem Zylinder (9), dessen axiale Länge (16) sehr viel kleiner als der Radius (17) ist;
-- zwei Domkappen (14, 15), die auf den gegenüberliegenden Enden des Zylinders (9) angeordnet sind und jeweils eine nach innen gerichtete konkave Einbuchtung (18, 19, 55, 56) zur Aufnahme eines Volumens von zu wickelnden Kohlenstofffasern (20) derart aufweisen, dass der Wickeldorn (10) im Bereich seiner Rotationsachse (12) eine geringere axiale Länge aufweist als im Bereich seines Umfangs; und
-- einer durch den Zylinder (9) und die Domkappen (14, 15) in Axialrichtung des Wickeldorns (10) hindurchgehenden, konzentrischen Ausnehmung (11) zur Aufnahme einer, insbesondere zweigeteilten, Welle (30) für die Verbindung mit einem Antrieb;
wobei die Vorrichtung ferner umfasst:
- eine Welle (30), welche durch die Ausnehmung (11) des Wickeldorns (10) geführt und mit dem Wickeldorn (10) form- und/oder kraftschlüssig verbunden ist;
- einen Antrieb, um die Welle (30) in eine Drehung zu versetzen;
- eine relativ zu dem Wickeldorn (10) verfahrbare Kohlenfaserzuführvorrichtung, die dazu ausgebildet ist, eine endlose Kohlenstofffaser (20) auszugeben;
- eine Steuervorrichtung, welche die Drehgeschwindigkeit und den Drehwinkel des Wickeldorns (10) relativ zu der Bewegung der Kohlenstofffaserzuführvorrichtung in vorgegebener Weise steuert, um die endlose Kohlenstofffaser (20) um den Wickeldorn (10) zu wickeln, sodass die Kohlenstofffaser (20) sich vom Außenumfang (6) der Chopperscheibe (1) nahezu radial in Richtung der Ausnehmung (2) erstreckt und die Ausnehmung (2) tangential berührt; und
- ein Mittel zum Versehen des Absorberbereichs (4) mit einem Absorbermaterial und zum Einbringen des zumindest eines Fensters (5) in den Absorberbereich.

8. Vorrichtung nach Anspruch 7, wobei bei dem Wickeldorn (10) auf dem Außenumfang (6) des Zylinders (9) ein Nadelkranz (25) oder eine rutschhemmende Oberfläche vorgesehen ist.

9. Vorrichtung nach Anspruch 7 oder 8, bei der die Welle (30) beidseitig des Wickeldorns (10) eine sich von der Welle (30) weg erweiternde Kegelform aufweist.

10. Vorrichtung nach einem der Ansprüche 7 bis 9, bei der eine Einheit zum Tränken der endlosen Kohlenstofffaser (20) mit einem Harzsystem vorgesehen ist, welche die Kohlenstofffaser (20) vor dem Wickelvorgang mit dem Harzsystem benetzt oder tränkt.

11. Vorrichtung nach einem der Ansprüche 7 bis 10, bei der diese zwei Pressscheiben (51, 52) umfasst, welche jeweils eine der konkaven Wölbung des Wickeldorns (10) entsprechende konkave Wölbung sowie einen dem Wickeldorn (10) entsprechenden Durchmesser aufweisen, um nach dem Wickelvorgang von den gegenüberliegenden Seiten des Wickeldorns (10) auf die Welle (30) geschoben und miteinander verspannt zu werden.

12. Verfahren zum Herstellen einer Chopperscheibe (1) nach einem der Ansprüche 1 bis 6 unter Verwendung einer Vorrichtung gemäß einem der Ansprüche 8 oder 9 bis 11, sofern auf Anspruch 8 rückbezogen, mit den Schritten:
a) Wickeln der von der Kohlenfaserzuführvorrichtung endlos ausgegebenen Kohlenstofffaser (20) entsprechend eines vorgegebenen Ablageplans um den Wickeldorn (10), wobei die Kohlenstofffaser (20) bei jedem Wickelschritt tangential an der Welle (30) und über den Nadelkranz (25) oder die rutschhemmende Oberfläche geführt wird, um auf beiden Seiten des Wickeldorns (10) eine Chopperscheibe (1; 40, 41) zu erstellen;
b) Verpressen der Kohlenstofffaser (20), indem auf den gegenüberliegenden Seiten des Wickeldorns (10) jeweils eine Pressscheibe (51, 52) auf die Welle (30) geschoben wird;
c) Durchtrennen der Kohlenstofffaser (20) während des Verpressens im Bereich des Umfangs des Wickeldorns (10), um zwei Chopperscheiben (1; 40, 41) zu erhalten;
d) Aushärten der noch verpressten Kohlenstofffaser (20) in einem Autoklaven unter Vakuum gemäß einem vorgegebenen Zeit-, Druck- und Temperaturprofil;
e) Entfernen der Pressscheiben (51, 52);
f) Erzeugen der Außenkontur, Einbringen eines Absorbermaterials in den Absorberbereich und Erzeugen des zumindest einen Fensters (5) in dem Absorberbereich (4) bei jeder der Chopperscheiben (1; 40, 41).

13. Verfahren nach Anspruch 12, bei dem der Rand und das zumindest eine Fenster (5) durch abrasives Wasserstrahlschneiden oder Fräsen erzeugt werden.

14. Verfahren nach Anspruch 12 oder 13, bei dem die Kohlenstofffasern (20) durch die oder in der Kohlenfaserzuführvorrichtung mit dem Harzsystem getränkt werden.

15. Verfahren nach einem der Ansprüche 12 bis 14, bei dem das Harzsystem nach dem Wickelvorgang in das Kohlenstofffasergelege eingebracht wird.

## Claims

1. Chopper disc (1) for a device for the processing of neutron beams, wherein the chopper disc () is formed of carbon fibers (20) and comprises the following:
- a concentric, hollow cylindrical recess (2) for receiving a hub for connection to a pivot bearing,
- a concentrically formed absorber area (4) for absorbing neutrons impinging on the chopper disc (1), and
- at least one window (5) in the absorber area (4) through which the neutrons of the neutron beam can pass,
**characterized in that**
- the carbon fibers extend from an outer periphery (6) of the chopper disc (1) nearly radially in a direction of the recess (2) and contact the recess (2) tangentially.

2. Chopper disc (1) according to claim 1, wherein each first and second end of the carbon fibers (20) ends at the outer periphery (6) and a section (23) running in a middle between the respective first and second end has a circular arc shape with a profile corresponding substantially to an edge of the recess (2).

3. Chopper disc (1) according to any one of the preceding claims, wherein, in a cross-section in a plane in which an axis of rotation (7) of the chopper disc (1) lies, the thickness of the chopper disc (1) decreases continuously starting from the axis of rotation (7) in a direction of the outer periphery (6).

4. Chopper disc (1) according to claim 3, wherein it has a convex arch in the cross-section at least in sections on each side.

5. Chopper disc (1) according to any one of the preceding claims, wherein the fiber volume content is between 50% and 70%.

6. Chopper disc (1) according to any one of the preceding claims, wherein the at least one window (5) is arranged in a section bordering the outer periphery (6) of the chopper disc (1).

7. Device for manufacturing a chopper disc (1) according to any one of claims 1 to 6, comprising:
- a winding mandrel (10), comprising
-- a cylinder (9) the axial length (16) of which is much smaller than the radius (17);
-- two dome caps (14, 15) arranged on opposing ends of the cylinder (9) and each having an inwardly oriented concave indentation (18, 19, 55 ,56) for receiving a volume of carbon fibers (20) to be wound such that the winding mandrel (10) in the region of its axis of rotation (12) has a smaller axial length than in the region of its periphery; and
-- a concentric recess (11) passing through the cylinder (9) and the dome caps (14, 15) in an axial direction of the winding mandrel (10) for receiving a shaft (30), which in particular is divided into two pieces, for connection to a drive;
wherein the device further comprises:
- a shaft (30) that is guided through the recess (11) of the winding mandrel (10) and is connected to the winding mandrel (10) in a form-fitting manner or a force-fitting manner;
- a drive for rotating the shaft (30);
- a carbon fiber feeding device that is displaceable relative to the winding mandrel (10) and is configured to deliver an endless carbon fiber (20);
- a control device which controls the speed of rotation and the angle of rotation of the winding mandrel (10) relative to the movement of the carbon fiber feeding device in a predefined manner in order to wind the endless carbon fiber (20) around the winding mandrel (10) such that the carbon fiber (20) extends from the outer periphery (6) of the chopper disc (1) nearly radially in a direction of the recess (2) and contact the recess (2) tangentially; and
- a means for providing the absorber area (4) with an absorber material and for arranging at least one window (5) in the absorber area (4).

8. Device according to claim 7, wherein in the winding mandrel (10) a needle crown (25) or a slip-resistant surface is arranged on an outer periphery of the cylinder (9).

9. Device according to claim 7 or 8, wherein the shaft (30) has a cone shape extending away from the shaft (30) on both sides of the winding mandrel (10).

10. Device according to any one of claims 7 to 9, further comprising a unit for saturating the endless carbon fiber (20) with a resin system, which wets or saturates the carbon fiber (20) with the resin system before the winding process.

11. Device according to any one of claims 7 to 10, further comprising:
two pressing discs (51, 52), each of which has a concave arch corresponding to the concave arch of the winding mandrel (10) and a diameter corresponding to the winding mandrel (10) in order to be pushed after the winding process from the opposing sides of the winding mandrel (10) onto the shaft (30) and braced with each other.

12. Method for manufacturing a chopper disc (1) according to any one of claims 1 to 6 by using a device according to any one of claims 8 or 9 to 11 as far as referring back to claim 8, the method comprising the steps:
a) winding the carbon fiber (20) delivered endlessly from the carbon fiber feeding device according to a predetermined deposition plan around the winding mandrel (10), the carbon fiber (20) being guided during each winding step tangentially on the shaft (30) and over the needle crown (25) or the slip-resistant surface in order to produce a chopper disc (1; 40, 41) on both sides of the winding mandrel (10);
b) pressing the carbon fiber (20) by pushing a respective pressing disc (51, 52) onto the shaft (30) on opposing sides of the winding mandrel (10);
c) severing the carbon fiber (20) during pressing in an area of the periphery of the winding mandrel (10) in order to obtain two chopper discs (1; 40, 41);
d) curing the still-pressed carbon fiber (20) in an autoclave in a vacuum according to a predefined time, pressure and temperature profile;
e) removing the pressing discs (51, 52);
f) producing an outer contour, introducing an absorber material into the absorber area and producing at least one window (5) in the absorber area (4) in each of the chopper discs (1; 40, 41).

13. Method of claim 12, wherein the edge and the at least one window (5) is formed by abrasive water jet cutting or milling.

14. Method of claim 12 or 13, wherein the carbon fibers (20) are saturated with a resin system by or in the carbon fiber feeding device.

15. Method according to any one of claims 12 to 14, wherein the resin system is introduced into the carbon fiber roving after the winding process.

## Revendications

1. Disque hacheur (1) pour un dispositif destiné à traiter des faisceaux de neutrons, le disque hacheur (1) est constitué de fibres de carbone (20) et comprend les éléments suivants :
- un évidement (2) cylindrique creux, concentrique pour recevoir un moyeu pour la liaison à une crapaudine,
- une zone d'absorbant conçue de manière concentrique (4) pour absorber les neutrons apparaissant sur le disque hacheur (1), et
- comprend au moins une fenêtre (5) dans la zone d'absorbant (4) à travers laquelle peuvent passer les neutrons du faisceau de neutrons,
**caractérisé en ce que**
- les fibres en carbone (20) s'étendent depuis la périphérie extérieure (6) du disque hacheur (1) quasiment radialement en direction de l'évidement (2) et entrent en contact tangentiellement avec l'évidement (2).

2. Disque hacheur (1) selon la revendication 1, dans lequel chaque première et chaque seconde extrémité des fibres de carbone (20) se terminent sur la périphérie extérieure (6) et une section (23) au centre s'étendant respectivement entre la première et la seconde extrémité décrit un arc de cercle dont le tracé coïncide sensiblement avec le bord de l'évidement (2).

3. Disque hacheur (1) selon l'une quelconque des revendications précédentes, dans lequel dans une section transversale dans un plan, dans lequel se trouve un axe de rotation (7) du disque hacheur (1), l'épaisseur du disque hacheur (1), à partir de l'axe de rotation (7) augmente en continu dans la direction de la périphérique extérieure (6).

4. Disque hacheur (1), selon la revendication 3, dans lequel celui-ci présente dans la section transversale au moins à certains endroits sur chaque côté un bombement convexe.

5. Disque hacheur (1) selon l'une quelconque des revendications précédentes, dans lequel le pourcentage en volume de fibres est compris entre 50 % et 70 %.

6. Disque hacheur (1) selon l'une quelconque des revendications précédentes, dans lequel l'au moins une fenêtre (5) est prévue dans une section adjacente à la périphérie extérieure (6) du disque hacheur (1).

7. Dispositif de fabrication d'un disque hacheur (1) selon l'une des revendications 1 à 6, comprenant :
- un mandrin de bobinage (10) doté
-- d'un cylindre (9) dont la longueur axiale (16) est considérablement inférieure au rayon (17);
-- de deux capuchons en forme de dôme (14, 15) qui sont disposés sur les extrémités opposées du cylindre (9) et qui présentent respectivement un renfoncement concave (18, 19, 55, 56) orienté vers l'intérieur destiné à loger un volume de fibres de carbone (20) devant être enroulées de manière à ce que le mandrin de bobinage (10) présente dans la zone de son axe de rotation (12) une longueur axiale inférieure à celle dans la zone de sa périphérie ; et
-- un évidement (11) concentrique, traversant le cylindre (9) et les capuchons en forme de dôme (14, 15) dans la direction axiale du mandrin de bobinage (10) pour loger un arbre (30), en particulier en deux parties, assurant la liaison à un entraînement ;
le dispositif comprenant en outre :
- un arbre (30), qui est guidé dans l'évidement (11) du mandrin de bobinage (10) et qui est relié à force et/ou par complémentarité de forme au mandrin de bobinage (10) ;
- un entraînement, pour mettre en rotation l'arbre (30) ;
- un dispositif d'alimentation en fibre de carbone pouvant se déplacer par rapport au mandrin de bobinage (10) qui est conçu pour délivrer une fibre de carbone (20) continue ;
- un dispositif de commande qui commande de manière prédéfinie la vitesse de rotation et l'angle de rotation du mandrin de bobinage (10) par rapport au déplacement du dispositif d'alimentation en fibre de carbone afin d'enrouler la fibre de carbone (20) continue autour du mandrin de bobinage (10) de sorte que la fibre de carbone (20) puisse s'étendre depuis la périphérie extérieure (6) du disque hacheur (1) quasiment radialement en direction de l'évidement (2) et entrer en contact tangentiellement avec l'évidement (2) ; et
- un moyen permettant de doter la zone d'absorbant (4) d'un matériau d'absorbant et de placer l'au moins une fenêtre (5) dans la zone d'absorbant.

8. Dispositif selon la revendication 7, dans lequel au niveau du mandrin de bobinage (10) sur la périphérie extérieure (6) du cylindre (9) est prévue une cage à aiguilles (25) ou une surface antidérapante.

9. Dispositif selon la revendication 7 ou 8, dans lequel l'arbre (30) a une forme conique partant de l'arbre (30) de chaque côté du mandrin de bobinage (10).

10. Dispositif selon l'une quelconque des revendications 7 à 9, comprenant en outre une unité destinée à imprégner la fibre de carbone (20) continue d'un système à base de résine, qui imprègne ou humidifie les fibres de carbone (20) avant le processus d'enroulement.

11. Dispositif selon l'une quelconque des revendications 7 à 10, dans lequel celui-ci comprend deux disques de presse (51, 52) qui respectivement présente un bombement concave correspondant au bombement concave du mandrin de bobinage (10) ainsi qu'un diamètre correspondant au mandrin de bobinage (10) pour, une fois le processus d'enroulement terminé, être poussés par les côtés opposés du mandrin de bobinage (10) sur l'arbre (30) et serrés l'un avec l'autre.

12. Procédé de fabrication d'un disque hacheur (1) selon l'une quelconque des revendications 1 à 6 à l'aide d'un dispositif selon l'une quelconque des revendications 8 ou 9 à 11, dans la mesure où il est fait référence à la revendication 8, comprenant les étapes consistant à :
a) enrouler la fibre de carbone (20) distribuée en continu par le dispositif d'introduction de fibre de carbone, conformément à un plan de disposition, autour du mandrin de bobinage (10), la fibre de carbone (20) étant guidée, à chaque étape d'enroulement, tangentiellement sur l'arbre (30) et par la cage à aiguilles (25) ou la surface antidérapante, pour produire un disque hacheur (1 ; 40, 41) de chaque côté du mandrin de bobinage (10) ;
b) presser la fibre de carbone (20), en poussant un disque de presse respectif (51, 52) sur l'arbre (30) sur les côtés opposés du mandrin de bobinage (10) ;
c) couper en deux la fibre de carbone (20) pendant le pressage dans la zone de la périphérie du mandrin de bobinage (10), pour obtenir deux disques hacheurs (1 ; 40, 41) ;
d) durcir la fibre de carbone (20) encore pressée dans un autoclave sous vide selon un profil de température, de pression et de temps prédéfini ;
e) retirer les disques hacheurs (51, 52) ;
f) produire le contour extérieur, introduire un matériau absorbant dans la zone d'absorbant et produire l'au moins une fenêtre (5) dans la zone d'absorbant (4) dans chaque disque hacheur (1 ; 40, 41).

13. Procédé selon la revendication 12, dans lequel le bord et l'au moins une fenêtre (5) sont formés par découpage au jet d'eau abrasif ou par fraisage.

14. Procédé selon la revendication 12 ou 13, dans lequel les fibres de carbone (20) sont imprégnées de système à base de résine par le dispositif d'introduction de fibre de carbone ou dans ce dernier.

15. Procédé selon l'une quelconque des revendications 12 à 14, dans lequel le système à base de résine est introduit dans la couche de fibre de carbone après le processus d'enroulement.
